# EUROPEAN PATENT SPECIFICATION

(11) **EP 3 193 047 B1**
(45) Date of publication and mention of the grant of the patent: **03.04.2019**
(21) Application number: 16151409.6
(22) Date of filing: 15.01.2016
(51) Int. Cl.: F16K 1/42, F16K 31/00, F24D 19/10, G05D 23/00

(54) **VALVE**
VENTIL
VANNE

(43) Date of publication of application: 19.07.2017
(73) Proprietor: Danfoss A/S, 6430 Nordborg (DK)
(72) Inventor: Clausen, Anders Østergaard, 8680 Ry (DK)
(74) Representative: Keil & Schaafhausen Patent- und Rechtsanwälte PartGmbB

(56) References cited:
- DE-A1-102009 051 209
- GB-A- 2 274 500
- US-A- 3 583 426

## Description

The invention relates to a valve comprising a valve housing, a valve seat and a valve element, wherein the valve element is displaceable relative to the housing in a closing direction towards the valve seat, wherein the valve seat is displaceable relative to the housing parallel to the closing direction.

Valves of this kind are, for example, used to control the flow of a cooling or heating fluid to a radiator or heat exchanger. Such valves usually have a valve seat arranged as a part of the housing or the valve seat is at least fixed to the housing. The flow of liquid through the valve can then be adjusted by moving the valve element relative to the valve seat.

A valve of the kind described at the outset is known, for example, from US 3 583 426 A. This valve comprises a valve seat which is formed of two or three parts. When the valve element is open, the parts of the valve seat contact each other. When the valve element rests against the nearest part of the valve seat, the other part or parts are moved away to open additional flow parts for disinfection purposes.

GB 2 274 500 A describes an anti-scaied device in form of a shower head that includes a temperature flow device containing temperature sensitive means for sensing the temperature of water supplied to the shower head. The valve element is connected to the temperature sensitive means to be moved against the valve seat, when the temperature of the incoming fluid exceeds a predetermined value. This value can be adjusted by adjusting the position of the valve seat from the outside.

DE 10 2009 051 209 A1 discloses a radiator having control means for adjusting the flow of a heating fluid through the radiator. The control means comprise a valve which is influenced by the temperature of the supplied heating fluid and of the return heating fluid.

The task underlying the present invention is therefore to provide a valve of the above kind that has an improved functionality.

According to the present invention the above task is solved in that at least one thermoactive member is arranged inside the housing, wherein the at least one thermoactive member increases the maximum distance of the valve seat to the valve element when the temperature of the at least one thermoactive member increases.

The closing direction here denotes the direction in which the valve element moves towards or away from the valve seat. In the following this direction will also be denoted by the axial direction. According to the invention a valve is thus provided in which the valve seat is displaceable relative to the housing parallel to the closing direction. Therefore, the distance between the valve element and the valve seat cannot only be adjusted by changing the position of the valve element but also by changing the position of the valve seat. This allows for a broader functionality of the valve since the opening degree of the valve can also be changed by displacing the valve seat and it is not necessary to influence the valve element. In particular, in case a thermostatic actuator is used to actuate the valve element and to compensate for a temperature increase in the thermostatic actuator by moving the valve element towards the valve seat, one has an independent means to readjust the maximum opening degree of the valve by changing the position of the valve seat. Furthermore, a moveable valve seat also opens new possibilities for additional control of the valve, for example, moving the valve seat beyond a certain distance could completely close off the valve. Moreover, by having the valve seat being moveable relative to the housing there is also a possibility to have the valve seat rotatable relative to the housing opening further control options. A preferred embodiment of such a valve is a heat exchanger valve, in particular a radiator valve. The thermoactive member here may, for example, be the valve seat member, in case the valve seat member is made from a material with a large coefficient of thermal expansion. Alternatively or additionally a thermoactive member may be a dedicated thermoactive member which can displace other members in the valve, for example the valve seat member, to displace the valve seat. A thermoactive member may also be a shape memory alloy actuator.

In a preferred embodiment the valve seat is arranged in a valve seat member. Arranging the valve seat in a valve seat member is a relatively simple option to have the valve seat displaceable relative to the housing parallel to the closing direction of the valve. Furthermore, such a valve seat member also allows to include further options, for example, to have the valve seat together with the valve seat member being rotatable. The valve seat can, for example, be arranged at one axial end region of the valve seat member. The valve seat member can be cylinder-like, preferably similar to a hollow cylinder. The valve seat member may however alternatively have a cone-like shape, a frustro- cone-like shape or a elliptic cylinder-like shape.The valve seat can be arranged at an inner surface of the valve seat member.

In a further preferred embodiment the valve comprises an insert, wherein the valve seat is guided in the insert. This has, for example, the advantage that there is a reduced wear of the valve seat member by friction to the insert, because one may produce both the valve seat member and the insert from the same material, for example a plastic. Therefore, the valve seat member does not need to be guided in direct contact with the housing, which is usually made from a metal. Preferably, the insert has a cylinder-like shape, e.g. similar to a hollow cylinder. Alternatively, the insert may have a cone-like shape, a frustro-cone-like shape or a elliptical cylinder-like shape.

In a further preferred embodiment the valve comprises a valve top insert wherein the valve seat member is at one axial end connected to the valve top insert. In this embodiment the valve seat together with the valve seat member either cannot be actively displaced relative to the housing or the valve top insert needs to be displaced together with the valve seat member. In case the valve top insert is fixed relative to the housing, this embodiment still allows to have a moveable valve seat, in particular when the valve seat is arranged on an axial end of the valve seat member opposite to the valve top insert. In this case, the valve seat member may thermally expand or elongate such that the distance from the valve top insert to the valve seat can increase or decrease under a temperature change.

In a further preferred embodiment the valve comprises a stem that is guided in the valve top insert, wherein the stem is at one end connected to the valve element. At the end opposite to the valve element the stem can either abut a valve attachment, for example a thermostatic actuator or the stem can be connected to or abut a pin of a stuffing box.

In a further preferred embodiment the valve seat member elongates by a larger distance under a temperature increase than the stem. Thereby, it is ensured that the distance of the valve element to the valve seat will increase under a temperature increase in particular if the stem directly abuts a valve attachment that actuates the valve. When a thermostatic actuator is used to actuate the valve the thermostatic actuator will in many cases be influenced by a temperature higher than the actual room temperature, for example, because of heat conduction from the hot water through the housing to the thermostatic actuator. Consequently, the thermostatic actuator will overcompensate and reduce the distance of the valve element to the valve seat by a too large amount. By having the valve seat member expand by a larger distance than the stem, one can ensure that the temperature correction of a thermostatic actuator attached to the valve is readjusted and more exact.

In a further preferred embodiment the valve comprises a stuffing box, wherein a pin is guided in the stuffing box. The pin can at one axial end abut an axial end of the stem opposite to the valve element. The other axial end of the pin opposite to the stem can then lead to an outside of the valve, such that it can be engaged by a valve attachment, for example a thermostatic actuator.

In a further preferred embodiment the valve seat member elongates by a larger distance under a temperature increase than the stem and the pin combined. In this embodiment it is ensured that in case both a pin and a stem are part of the valve the overall thermal elongation of pin and stem combined is less than the thermal expansion of the valve seat member. Thereby it is ensured that under a temperature increase the internal elongation/expansion of the parts of the valve will lead to an increase in the distance of the valve element to the valve seat. This ensures a counter-compensation of the readjustment performed by an attached thermostatic actuator which will usually reduce the distance of the valve element to the valve seat under a temperature increase.

Preferably, the valve seat member thermally elongates to increase the maximum distance of the valve seat to the valve element. In this case the valve seat member can, for example, be fixed either to the housing or to another part of the valve, for example the valve top member, and on the opposite end be allowed to elongate by thermal expansion. In this case the valve seat is preferably arranged at an axial end of the valve seat member opposite to the end of the valve seat member that is fixed to the housing and/or another part of the valve. Thereby, under thermal expansion the length of the valve seat member can increase, whereby the distance of the valve seat to the valve element is increased, which in turn increases the flow through the valve. This is advantageous, if a thermostatic actuator is attached to the valve which usually overcompensates a temperature increase because of an additional heating due to indirect contact to the hot water which influences the thermostatic actuator with a temperature beyond the room temperature. Consequently, the thermal expansion of the valve seat member leads to a more exact control of the opening degree of the valve under a temperature change.

In a further preferred embodiment the thermal elongation of the valve seat member is limited by the valve top insert at one end and by the insert at the other end. This ensures that in case the movability of the valve seat is primarily used for a correction of the temperature compensation of a thermostatic actuator the valve seat can only be moved in a limited range to ensure that the distance of the valve seat to the valve element does not become too large.

In a further preferred embodiment the valve seat member is rotatable inside the insert. !n this embodiment one may envision additional functions that can be performed by having the valve seat being moveable and arranged in a valve seat member. For example, by rotating the valve seat member inside the insert one may also adjust the maximum amount of flow through the valve or even completely close off the valve irrespectable of the position of the valve seat to the valve element. The valve may to this end comprise a inspection window or inspection hole which allows to observe the rotational position of the valve seat member from an outside. Preferably, the valve seat member as well as the insert both have a cylinder-like shape. In this embodiment the valve seat member can both be rotatable in the insert and may also thermally elongate inside the insert.

In a further preferred embodiment the valve comprises a thermostatic actuator, wherein the thermostatic actuator reduces the maximum distance of the valve element to the valve seat when the thermostatic actuator is influenced by a temperature increase, wherein at least one thermoactive member at the same time thermally expands to increase the maximum
distance of the valve element to the valve seat to compensate for a higher temperature of the thermostatic actuator than the room temperature.

In a further preferred embodiment at least one thermoactive member is arranged at an axial end of the valve seat member. Preferably, in this case the thermoactive member is arranged in the valve in the form of a ring, for example a wax ring.

In a further preferred embodiment at least one thermoactive member is a wax ring. Wax has a high coefficient of thermal expansion and therefore is a good choice for a thermoactive member to displace the valve seat. In this case the valve seat is displaced indirectly by placing the wax ring, for example, at the axial end of the valve seat member opposite to the valve seat. This way, the valve seat will be displaced away from the valve element when the wax ring thermally expands under a temperature increase.

Preferred embodiments of the invention will now be described in more detail with reference to the figures, wherein:
- Fig. 1: shows a cut view of a valve according to a first embodiment of the invention,
- Fig. 2: shows an enlarged view of the valve shown in Fig. 1,
- Fig. 3: shows an isometric cut view of a valve according to the first embodiment of the invention,
- Fig. 4: shows an enlarged view of the valve according to Fig. 3,
- Fig. 5: shows a cut view of a valve according to a second embodiment,
- Fig. 6: shows an enlarged view of the valve according to Fig. 5.

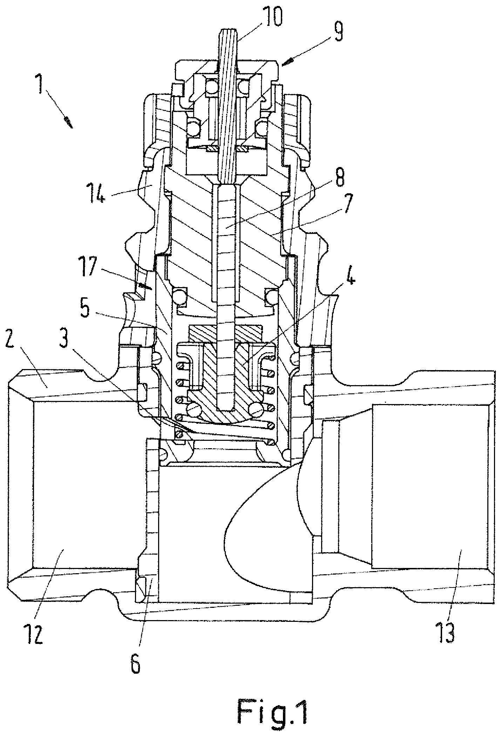

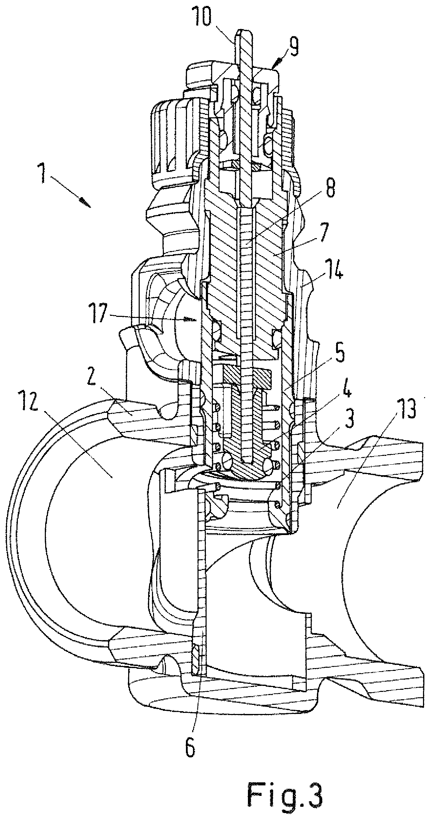

Fig. 1 to 4 show a first embodiment of a valve 1 according to the invention which is a radiator valve or a valve for another heat exchanger for heating or cooling purposes. The valve 1 comprises a housing 2 in which an inlet 13 as well as an outlet 12 are arranged. The valve 1 comprises a valve seat 3 that cooperates with a valve element 4 to throttle a fluid flow through the valve. The valve seat 3 is in this embodiment arranged in a valve seat member 5 that has a cylinder-like shape. The valve seat 3 is arranged at one axial end of the valve seat member 5. The valve seat 3 is arranged at an inner surface of the valve seat member 5.

The valve element 4 is arranged at one axial end of a stem 8. The stem 8 as well as the valve element 4 can be axially displaced to throttle or close the valve. At the axial end of the stem 8 opposite to the valve element 4 a pin 10 of a stuffing box 9 is arranged. The stem 8 is guided in a valve top insert 7. The valve top insert 7 is held inside the housing by a valve top 14. The valve top 14 can be connected to the housing 2, for example by a snap-in connection. The latter is advantageous if the valve top 14 is made from a plastic material while the housing 2 is made from a metal.

The valve 1 may comprise a thermostatic actuator or a similar valve attachment which is for simplicity not shown in the Fig. 1 to 6. However, the thermostatic actuator may, for example, be attached to the valve top 14 and engage the pin 10 to actuate the valve element 4.

Thermostatic actuators in the state of the art however have the disadvantage that they are often heated above the momentary room temperature by the direct contact to the valve which is heated by the heating fluid. Since the heating fluid usually has a temperature far above the room temperature the thermostatic actuator will in many cases also be heated to a higher temperature than the room temperature. Thermostatic actuators are usually arranged to reduce the flow through the valve when the temperature of the thermostatic actuator increases such that the valve does not need to be manually readjusted once a desired temperature has been reached. However, since the thermostatic actuator will in many cases be heated to a too high temperature not corresponding to the actual room temperature the thermostatic actuator will often close the valve too far compared to the actual room temperature that has been reached. According to the present invention the valve seat can now also be displaced relative to the housing parallel to the closing direction of the valve element 4 towards the valve seat 3. Preferably, this is achieved by at least one thermoactive member in the valve which can expand or elongate and thus displace the valve seat 3.

In the first embodiment according to Fig. 1 to 4 the thermoactive member is the valve seat member 5. The valve seat member 5 to this end is only fixed to the valve top insert 7 at the axial end of the valve seat member 5 opposite to the valve seat 3. This way, when the valve seat member 5 thermally elongates under a temperature increase the valve seat 3 will be displaced in a direction away from the valve element 4 whereby the flow through the valve is increased. However, since this effect is preferably smaller than the readjustment of the opening degree of the valve by an attached thermostatic actuator the overall effect of a temperature increase will still be that the valve element 4 will be moved closer to the valve seat 3. However, in the view according to Fig. 1 to 4 both the valve seat 3 as well as the valve element 4 would be displaced downwards in this case.

A further effect that has to be taken into account is of course that also the stem 8 as well as the pin 10 will to some degree thermally expand and elongate under a temperature increase. Therefore, preferably the valve seat member 5 elongates by a larger distance under a temperature increase than the stem 8. In case both a stem 8 as well as a pin 10 are used it is preferred if the valve seat member 5 elongates by a larger distance under a temperature increase than that of the stem 8 and the pin 10 combined. This can be achieved by choosing a material for the valve seat member 5 that has a larger coefficient of thermal expansion than that of the stem 8 and the pin 10.

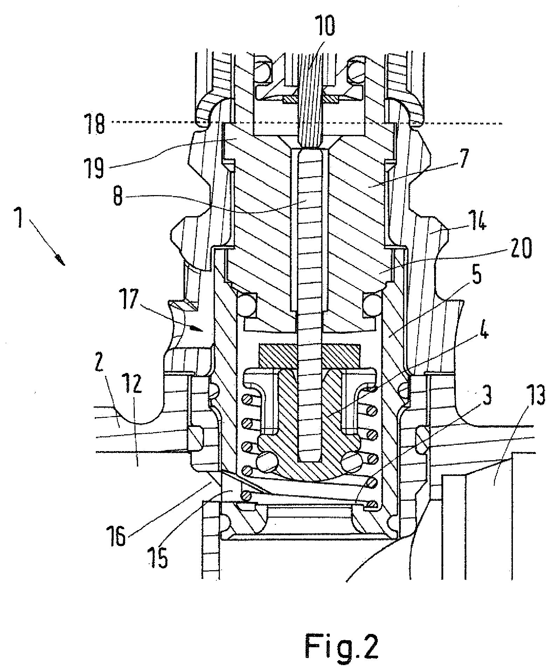

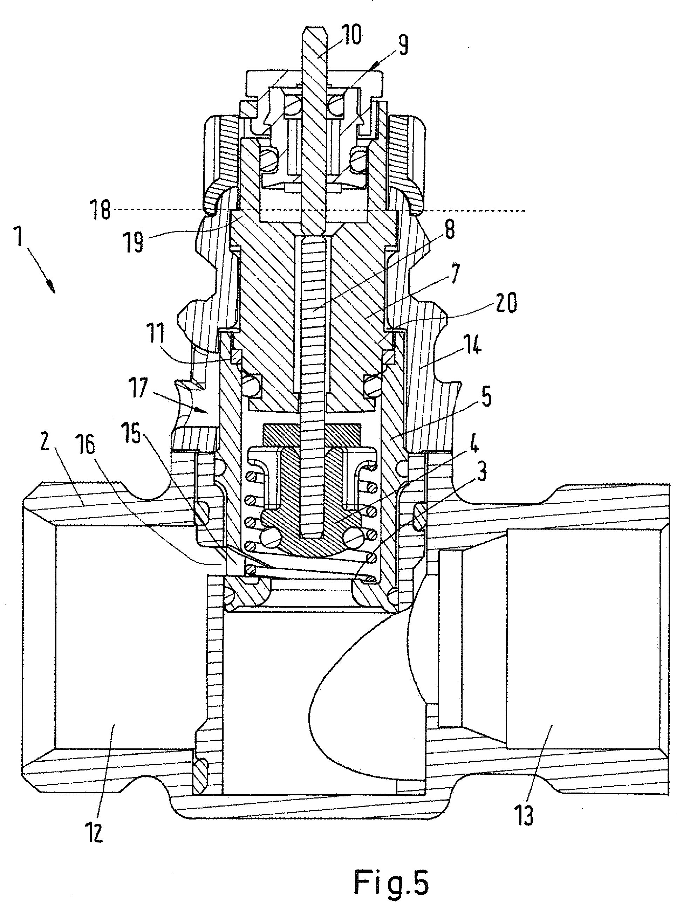

The axial elongation of the valve top insert 7 and the valve seat member 5 under a temperature increase can be defined with respect to a reference plane 18 shown in Fig. 2 and 5. The valve top insert 7 abuts the valve top 14 at the reference plane 18 with a rim 19. At an axial end 20 of the valve top insert 7 the valve top insert 7 abuts the valve seat member 5. Consequently, a thermal elongation of the valve top insert 7 with respect to the reference plane 18 leads to a displacement of the valve seat member 5 displacing the valve seat 3 away from the valve element 4. This effect adds to the thermal elongation of the valve seat member 5 itself which also displaces the valve seat 3 away from the reference plane 18. The valve seat member 5 and the valve top insert 7 are joined such that their combined elongation under a temperature increase moves the valve seat 3 away from the reference plane 18. The axial displacement of the valve seat 3 with respect to the reference plane 18 thus depends on the hinged movement of the valve top insert 7 and the valve seat member 5. Thereby, the valve seat 3 is displaced away from the reference plane 18 by a larger distance under a temperature increase than the valve element 4 due to a temperature increase in the stem 8 and/or the pin 10.

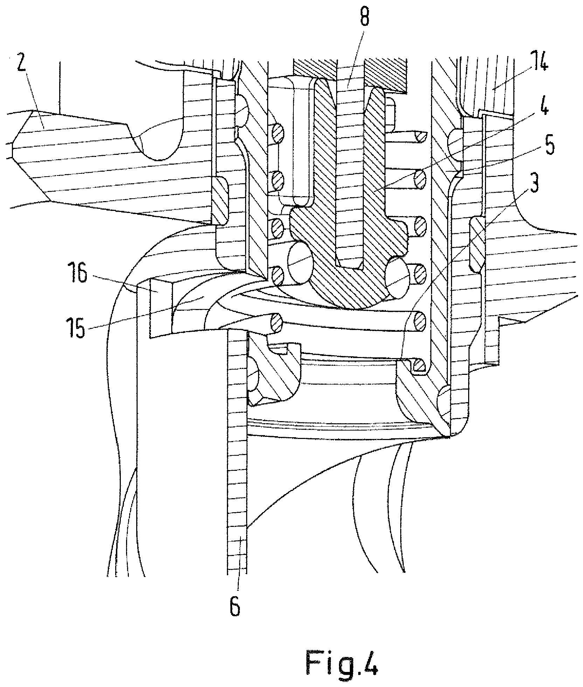

Referring to the enlarged view of Fig. 2 and 4 the valve seat member 5 also comprises a first opening 15. Similarly the insert 6 comprises a second opening 16. In Fig. 2 and 4 the first opening 15 and the second opening 16 are aligned in the axial direction as well as rotationally. In this relative position of the first opening 15 and the second opening 16 fluid coming from the valve seat 3 can pass the first opening 15 and then the second opening 16 to reach the outlet 12. However, depending on the relative sizes of the first opening 15 and the second opening 16 one may also use the displaceable valve seat 3 to achieve an additional means of throttling the flow through the valve by changing the alignment of the first opening 15 and the second opening 16. For example, the valve seat member 5 may also be rotatable, whereby the effective flow cross section through the second opening 16 and the first opening 15 towards the outlet 12 can be reduced. Moreover, one may even close any direct fluid connection to the outlet 12 through the first and second openings 15 and 16 by rotating the valve seat member 5. This allows for an additional control functionality of the valve, for example one may close off the valve during installation or maintenance towards the inlet 13 or the outlet 12.

The valve 1 furthermore comprises an inspection window 17. In the shown embodiments the inspection window 17 is arranged in the valve top 14 to allow an inspection of the valve seat member 5. This may, for example, be used to inspect the current rotational position of the valve seat member 5. Additionally or alternatively the inspection window 17 can also be used to check the current axial position of the valve seat member 5. Consequently, the first opening 15 and the second opening 16 can be used as a means of presetting the valve by rotating the valve seat member 5 relative to the insert 6.

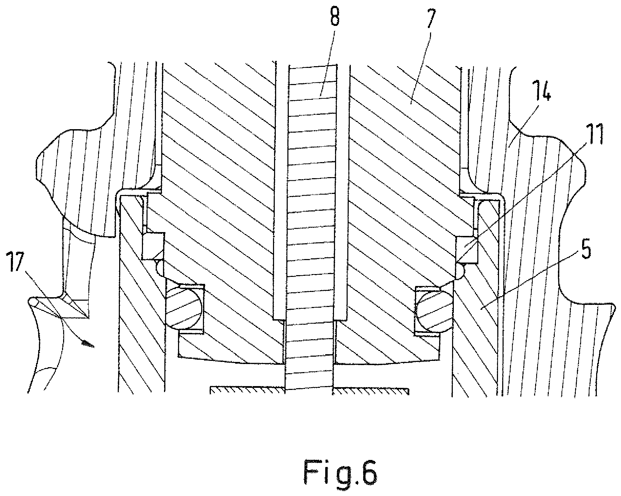

The second embodiment according to Fig. 5 and 6 comprises a thermoactive member 11. Preferably, the thermoactive member 11 has the shape of a wax ring, but it may also be a shape memory alloy actuator. The position of the thermoactive member 11 can be seen in detail in Fig. 6. The thermoactive member 11 is arranged at an axial end of the valve seat member 5 opposite to the valve seat 3. The thermoactive member 11 preferably abuts the valve seat member 5 as well as the valve top insert 7. Using a dedicated thermoactive member 11 has the advantage that the choice of materials in particular for the valve seat member 5 is broader. In particular, it is not necessary in this case that the coefficient of thermal expansion of the valve seat member 5 is much larger than the coefficient of thermal expansion of the stem 8 or the pin 10 in order to achieve a net relative displacement of the valve seat 5 relative to the valve element 4 under a temperature increase in the valve interior. However, in Fig. 1 to 4 the valve seat member 5 has the role of a thermoactive member with a large coefficient of thermal expansion. Nevertheless, both a dedicated thermoactive member 11 as well as a thermoactive member with additional functions like the valve seat member 5 may be used to achieve an overall increase of the distance of the valve seat 3 and the valve element 4 due to a temperature increase in the valve. As said before, the combined effect of the thermal expansion inside the valve 1 and the readjustment due to an attached valve attachment should however always result in a throttling of the flow through the valve under a temperature increase.

## Claims

1. A valve (1) comprising a valve housing (2), a valve seat (3) and a valve element (4), wherein the valve element (4) is displaceable relative to the housing (2) in a closing direction towards the valve seat (3), wherein the valve seat (3) is displaceable relative to the housing (2) parallel to the closing direction, wherein at least one thermoactive member (11) is arranged inside the housing (2), **characterized in that** the at least one thermoactive member (11) displaces the valve seat to increase the maximum distance of the valve seat (3) to the valve element (4) when the temperature of the at least one thermoactive member (11) increases.

2. The valve (1) according to claim 1, **characterized in that** the valve seat (3) is arranged in a valve seat member (5).

3. The valve (1) according to claims 1 or 2, **characterized in that** the valve comprises an insert (6), wherein the valve seat (3) is guided in the insert (6).

4. The valve (1) according to claims 2 or 3, **characterized in that** the valve (1) comprises a valve top insert (7), wherein the valve seat member (5) is on one axial end connected to the valve top insert (7).

5. The valve (1) according to claim 4, **characterized in that** the valve (1) comprises a stem (8), that is guided in the valve top insert (7), wherein the stem (8) is on one end connected to the valve element (3).

6. The valve (1) according to claim 5, **characterized in that** the valve seat member (5) elongates by a larger distance under a temperature increase than the stem (8).

7. The valve (1) according to any of claims 1 to 6, **characterized in that** the valve comprises a stuffing box (9), wherein a pin (10) is guided in the stuffing box (9).

8. The valve (1) according to claim 7, **characterized in that** the valve seat member (5) elongates by a larger distance under a temperature increase than the stem (8) and the pin (10) combined.

9. The valve (1) according to any of claims 2 to 8, **characterized in that** the valve seat member (5) thermally elongates to increase the maximum distance of the valve seat (3) to the valve element (4).

10. The valve (1) according to claim 9, **characterized in that** the thermal elongation of the valve seat member (5) is limited by the valve top insert (7) at the one end and by the insert (6) at the other end.

11. The valve (1) according to any of claims 3 to 10, **characterized in that** the valve seat member (5) is rotatable inside the insert (6).

12. The valve (1) according to any of claims 1 to 11, **characterized in that** the valve (1) comprises a thermostatic actuator, wherein the thermostatic actuator reduces the maximum distance of the valve element (4) to the valve seat (3) when the thermostatic actuator is influenced by a temperature increase, wherein the at least one thermoactive member (11) at the same time thermally elongates to increase the maximum distance of the valve element (4) to the valve seat (3) to compensate for a higher temperature of the thermostatic actuator than the room temperature.

13. The valve (1) according to any of claims 1 to 12, **characterized in that** at least one thermoactive member (11) is arranged at an axial end of the valve seat member (5).

14. The valve (1) according to any of claims 1 to 13, **characterized in that** at least one thermoactive member (11) is a wax ring.

## Patentansprüche

1. Ventil (1), aufweisend ein Ventilgehäuse (2), einen Ventilsitz (3) und ein Ventilelement (4), wobei das Ventilelement (4) in Bezug auf das Gehäuse (2) in einer Schließrichtung in Richtung auf den Ventilsitz (3) verschiebbar ist, wobei der Ventilsitz (3) in Bezug auf das Gehäuse (2) parallel zu der Schließrichtung verschiebbar ist, wobei mindestens ein thermoaktives Element (11) im Inneren des Gehäuses (2) angeordnet ist, **dadurch gekennzeichnet, dass**
das mindestens eine thermoaktive Element (11) den Ventilsitz verschiebt, um den maximalen Abstand des Ventilsitzes (3) zu dem Ventilelement (4) zu vergrößern, wenn sich die Temperatur des mindestens einen thermoaktiven Elements (11) erhöht.

2. Ventil (1) nach Anspruch 1, **dadurch gekennzeichnet, dass** der Ventilsitz (3) in einem Ventilsitzelement (5) angeordnet ist.

3. Ventil (1) nach Anspruch 1 oder 2, **dadurch gekennzeichnet, dass** das Ventil einen Einsatz (6) aufweist, wobei der Ventilsitz (3) in dem Einsatz (6) geführt ist.

4. Ventil (1) nach Anspruch 2 oder 3, **dadurch gekennzeichnet, dass** das Ventil (1) einen oberen Ventileinsatz (7) aufweist, wobei das Ventilsitzelement (5) an einem axialen Ende mit dem oberen Ventileinsatz (7) verbunden ist.

5. Ventil (1) nach Anspruch 4, **dadurch gekennzeichnet, dass** das Ventil (1) einen Schaft (8) aufweist, welcher in dem oberen Ventileinsatz (7) geführt ist, wobei der Schaft (8) an einem Ende mit dem Ventilelement (3) verbunden ist.

6. Ventil (1) nach Anspruch 5, **dadurch gekennzeichnet, dass** sich das Ventilsitzelement (5) unter einer Temperaturerhöhung um eine größere Strecke ausdehnt als der Schaft (8).

7. Ventil (1) nach einem der Ansprüche 1 bis 6, **dadurch gekennzeichnet, dass** das Ventil eine Stopfbuchse (9) aufweist, wobei ein Dorn (10) in der Stopfbuchse (9) geführt ist.

8. Ventil (1) nach Anspruch 7, **dadurch gekennzeichnet, dass** sich das Ventilsitzelement (5) unter einer Temperaturerhöhung um eine größere Strecke ausdehnt als der Schaft (8) und der Dorn (10) gemeinsam.

9. Ventil (1) nach einem der Ansprüche 2 bis 8, **dadurch gekennzeichnet, dass** sich das Ventilsitzelement (5) thermisch ausdehnt, um den maximalen Abstand des Ventilsitzes (3) zu dem Ventilelement (4) zu vergrößern.

10. Ventil (1) nach Anspruch 9, **dadurch gekennzeichnet, dass** die thermische Ausdehnung des Ventilsitzelements (5) durch den oberen Ventileinsatz (7) an dem einen Ende und durch den Einsatz (6) an dem anderen Ende begrenzt ist.

11. Ventil (1) nach einem der Ansprüche 3 bis 10, **dadurch gekennzeichnet, dass** das Ventilsitzelement (5) im Inneren des Einsatzes (6) drehbar ist.

12. Ventil (1) nach einem der Ansprüche 1 bis 11, **dadurch gekennzeichnet, dass** das Ventil (1) ein thermostatisches Stellglied aufweist, wobei das thermostatische Stellglied den maximalen Abstand des Ventilelements (4) zu dem Ventilsitz (3) verringert, wenn das thermostatische Stellglied durch eine Temperaturerhöhung beeinflusst wird,
wobei sich das mindestens eine thermoaktive Element (11) zur gleichen Zeit thermisch ausdehnt, um den maximalen Abstand des Ventilelements (4) zu dem Ventilsitz (3) zu vergrößern, um eine höhere Temperatur des thermostatischen Stellglieds als die Raumtemperatur auszugleichen.

13. Ventil (1) nach einem der Ansprüche 1 bis 12, **dadurch gekennzeichnet, dass** mindestens ein thermoaktives Element (11) an einem axialen Ende des Ventilsitzelements (5) angeordnet ist.

14. Ventil (1) nach einem der Ansprüche 1 bis 13, **dadurch gekennzeichnet, dass** das mindestens eine thermoaktive Element (11) ein Wachsring ist.

## Revendications

1. Vanne (1) comprenant un boîtier de vanne (2), un siège de vanne (3) et un élément de vanne (4), l'élément de vanne (4) pouvant être déplacé par rapport au boîtier (2) dans une direction de fermeture vers le siège de vanne (3), le siège de vanne (3) pouvant être déplacé par rapport au boîtier (2) parallèlement à la direction de fermeture, au moins un élément thermoactif (11) étant disposé à l'intérieur du boîtier (2), **caractérisée en ce que** l'au moins un élément thermoactif (11) déplace le siège de vanne pour augmenter la distance maximale entre le siège de vanne (3) et l'élément de vanne (4) lorsque la température de l'au moins un élément thermoactif (11) augmente.

2. Vanne (1) selon la revendication 1, **caractérisée en ce que** le siège de vanne (3) est disposé dans un élément de siège de vanne (5).

3. Vanne (1) selon la revendication 1 ou 2, **caractérisée en ce que** la vanne comprend un insert (6), le siège de vanne (3) étant guidé dans l'insert (6).

4. Vanne (1) selon la revendication 2 ou 3, **caractérisée en ce que** la vanne (1) comprend un insert de sommet de vanne (7), le siège de vanne (5) étant relié sur une extrémité axiale à l'insert de sommet de vanne (7) .

5. Vanne (1) selon la revendication 4, **caractérisée en ce que** la vanne (1) comprend une tige (8) qui est guidée dans l'insert de sommet de vanne (7), la tige (8) étant reliée d'un côté à l'élément de vanne (3).

6. Vanne (1) selon la revendication 5, **caractérisée en ce que** le siège de vanne (5) s'allonge d'une plus grande distance que la tige (8) lorsque la température augmente.

7. Vanne (1) selon l'une quelconque des revendications 1 à 6, **caractérisée en ce que** la vanne comprend un presse-étoupe (9), dans lequel une broche (10) est guidée dans le presse-étoupe (9).

8. Vanne (1) selon la revendication 7, **caractérisée en ce que** le siège de vanne (5) s'allonge d'une plus grande distance sous l'effet d'une augmentation de température que la tige (8) et l'axe (10) combinés.

9. Vanne (1) selon l'une quelconque des revendications 2 à 8, **caractérisée en ce que** le siège de vanne (5) s'allonge thermiquement pour augmenter la distance maximale entre le siège de vanne (3) et l'élément de vanne (4).

10. Vanne (1) selon la revendication 9, **caractérisée en ce que** l'allongement thermique du siège de vanne (5) est limité à une extrémité par l'insert de sommet de vanne (7) et, à l'autre extrémité, par l'insert (6).

11. Vanne (1) selon l'une quelconque des revendications 3 à 10, **caractérisée en ce que** le siège de vanne (5) est rotatif à l'intérieur de l'insert (6).

12. Vanne (1) selon l'une quelconque des revendications 1 à 11, **caractérisée en ce que** la vanne (1) comprend un actionneur thermostatique, l'actionneur thermostatique réduisant la distance maximale entre l'élément de vanne (4) et le siège de vanne (3) lorsque l'actionneur thermostatique est influencé par une augmentation de température, l'au moins un élément thermoactif (11) étant allongé thermiquement en même temps, pour augmenter la distance maximale entre l'élément de vanne (4) et le siège de vanne (3), en compensation d'une température de l'actionneur thermostatique supérieure à la température ambiante.

13. Vanne (1) selon l'une quelconque des revendications 1 à 12, **caractérisée en ce qu'**au moins un élément thermoactif (11) est disposé à une extrémité axiale du siège de vanne (5).

14. Vanne (1) selon l'une quelconque des revendications 1 à 13, **caractérisée en ce qu'**au moins un élément thermoactif (11) est un anneau de cire.
